# EUROPÄISCHE PATENTSCHRIFT

(11) **EP 2 748 111 B1**
(45) Veröffentlichungstag und Bekanntmachung des Hinweises auf die Patenterteilung: **07.01.2015**
(21) Anmeldenummer: 11799361.8
(22) Anmeldetag: 17.11.2011
(51) Int. Cl.: C02F 1/44, B01D 61/18, B01D 65/02, E03C 1/126, C02F 1/36

(54) **VORRICHTUNG UND VERFAHREN ZUR HERSTELLUNG KEIMFREIEN WASSERS MITTELS EINES QUERSTROM-FLÜSSIGKEITSSTERILFILTES**
DEVICE AND METHOD FOR PRODUCING STERILE WATER BY MEANS OF A CROSS-FLOW LIQUID STERILE FILTER
DISPOSITIF ET PROCÉDÉ DE PRODUCTION D'EAU EXEMPTE DE GERMES AU MOYEN D'UN FILTRE DE STÉRILISATION DE LIQUIDES À ÉCOULEMENT TRANSVERSAL

(43) Veröffentlichungstag der Anmeldung: 02.07.2014
(73) Patentinhaber: Schluttig, Alexander, 02991 Lauta (DE)
(72) Erfinder: Schluttig, Alexander, 02991 Lauta (DE)
(74) Vertreter: Kossak, Sabine
(86) Internationale Anmeldenummer: PCT/EP2011/005789
(87) Internationale Veröffentlichungsnummer: WO 2013/071941

(56) Entgegenhaltungen:
- EP-A1- 0 020 157
- DE-A1- 3 738 231
- DE-U1-202007 000 153
- JP-A- 11 090 432

## Beschreibung

Die Erfindung betrifft eine Vorrichtung und ein Verfahren zur Herstellung keimfreien Wassers mittels eines endständigen Querstrom-Flüssigkeitssterilfilters ohne bakteriendichten Verschluss der Wasserleitung während des Filtrationsvorganges.

Der Stand der Technik des Einsatzes von Hohlfasermembran-Filtern für die endständige Sterilfiltration von Trinkwasser wird durch DE 199 18 221 C1 nächstliegend offenbart. Die darin beschriebene Lehre sieht einen Querstrom-Flüssigkeitssterilfilter vor, welcher die wahlweise Entnahme von filtriertem und unfiltriertem Wasser durch das Vorhandensein separater Auslassöffnungen ermöglicht. Eine frühere Lehre US 4,980,056 A beschreibt einen Filter in der Form eines Hohlfasermembran-Bündels mit einer Auslassöffnung für steriles Wasser und einer Auslassöffnung für keimhaltiges Retentat. Die Entnahme von nicht filtriertem Trinkwasser durch eine der beiden Auslassöffnungen ist aber nicht vorgesehen.

Der wesentliche Nachteil beider Lehren besteht darin, dass keine Abführung des keimhaltigen Retentats während der Filtration erfolgt. Die DE 3738231 A1 zeigt einen nicht endständig angeordneten Querstrom-Flüssigkeitsfilter.

Die endständige POU (Point of Use)-Trinkwasser-Sterilfiltration mit Querstrom-Flüssigkeitssterilfiltern wird in der Praxis bisher ausschließlich als so genannte Dead-End-Filtration betrieben. Die zeitgleiche Entfernung von keimhaltigem Retentat aus dem Filter während der Filtration ohne gesicherte Desinfektion ist nämlich unter hygienischen Aspekten äußerst nachteilig und daher in klinischen Hochrisikobereichen nicht durchführbar. POU-Trinkwasser-Sterilfilter haben wegen dieser fehlenden Abführung von keimhaltigem Retentat extrem niedrige, sichere Benutzungszeiten. Die technologischen Gründe dafür werden im Folgenden beschrieben.

In der klinischen Anwendung der endständigen POU-Sterilfiltration von Trinkwasser mittels Querstrom-Flüssigkeitssterilfiltern spielt neben der möglichst vollständigen Abtrennung von Mikroorganismen aus dem zu filtrierenden keimhaltigen Wasser die Vermeidung der Freisetzung von Endotoxinen (Pyrogenen) aus Filtrationsbelägen auf dem Filtermedium eine Rolle, die von klinischen Anwendern bisher weder vermutet noch erkannt wird.

Ein weiterer wesentlicher Nachteil jeder Sterilfiltration ist der verfahrensbedingte bakteriendichte Verschluss der vor dem Filter liegenden Wasserleitung durch die zur Filtration verwendeten bakteriendichten Membranen. Dieser bakteriendichte Verschluss führt zur beschleunigten Rückverkeimung (retrograde mikrobiologische Kontamination) der Wasserleitung. Diese Tatsache wird im klinischen Bereich bislang aber nicht beachtet. Die beschleunigte retrograde Kontamination der Wasserleitung führt neben der vermehrten Freisetzung von Endotoxinen zu einer hohen Konzentration an organischen Inhaltsstoffen, welche wiederum die hygienische Haltbarkeit des nach dem Stand der Technik sterilfiltrierten Wassers verkürzt. Durch die hohe Konzentration an organischen Inhaltsstoffen wird nämlich eine Neubesiedlung des sterilfiltrierten Wassers mit Mikroorganismen begünstigt.

Nachfolgend wird noch einmal der Stand der Technik der POU-Trinkwasser-Sterilfiltration unter Einbeziehung von DE 199 18 211 kurz zusammengefasst.

Sterilfilter, wie sie nach dem Stand der Technik im industriellen und klinischen Bereich zur Abtrennung von Mikroorganismen aus dem Trinkwasser als so genannte endständige oder Point-of-Use-Filter (POU) verwendet werden, arbeiten bekanntermaßen nach zwei Prinzipien:
1. Statische Druck-Filtration: Die Abtrennung von Partikeln, Kolloiden und Mikroorganismen erfolgt beim druckbedingten Durchfließen des zu filtrierenden Wassers durch ein Filtermedium, beispielsweise eine Membran, ein Membranbündel oder einen Keramik-Filterkörper. Bei der Sterilfiltration von Wasser entsteht somit ein steriler Filtratstrom und die abgetrennten Mikroorganismen bleiben auf der Membran zurück und werden dort angereichert (US 4,989,056). Die Filtration kann dann solange durchgeführt werden, bis das Filtermedium mit abgetrennten Partikeln und Mikroorganismen gesättigt ist.
2. Dynamische Querstrom-Filtration: Die Besonderheit in der Anwendung nach dem Stand der Technik liegt darin, dass aufgrund hygienischer Probleme bei der Entsorgung des keimhaltigen Retentates die endständige Querstromfiltration in der Praxis der Trinkwasserentkeimung als so genannte Dead-End-Filtration mit während der Filtration geschlossenem Retentatauslauf betrieben wird. Dies trifft auch für die praktische Ausführung des in DE 199 18 221 beschriebenen Filters mit zwei getrennten Auslässen zu.

Beide Systeme, die den Stand der Technik in der endständigen oder Point-of-Use -Filtration (POU) von Trinkwasser repräsentieren, weisen die nachfolgenden funktionseinschränkenden und hygienischen Nachteile auf:
1. Die abgetrennten Mikroorganismen werden bestimmungsgemäß auf einer Membran (statische Filtration) oder in einem Raum zwischen Membranen (dynamische Dead-End-Filtration) zurückgehalten und aufkonzentriert. Dadurch werden wiederum drei für die beabsichtigte Filtration nachteilige Vorgänge begünstigt:
   a) Die Freisetzung von so genannten Endotoxinen oder Pyrogenen (Entzündungen erregenden mikrobiellen Zellbestandteilen) durch das verfahrensbedingte Absterben und den darauf folgenden Zerfall (die so genannte Lyse) der Mikroorganismen. Die Ansammlung und Aufkonzentrierung abgetrennter Mikroorganismen im Filtrationsraum des Filters führt aufgrund der Mangelbedingungen (Sauerstoff) für diese Mikroorganismen nämlich zum Absterben und zum Zerfall (Lyse) derselben und damit zur Freisetzung von Zellwandbestandteilen, den so genannten Endotoxinen oder Pyrogenen. Diese können aufgrund ihrer geringen Größe den Filter passieren, wenn dessen Porengröße im Bereich der nach dem Stand der Technik für Sterilfiltrationen verwendeten Membranen von 0,1 - 0,2 Mikrometer liegt. Im Sinne der Wirtschaftlichkeit und der Verfügbarkeit ist man üblicherweise an langen Benutzungszeiten der Filter ohne Unterbrechung interessiert. Je länger jedoch die Standzeiten dieser Filter gehalten werden, umso höher wird zwangsläufig die Konzentration an organischen Stoffen und Pyrogenen im keimfreien Filtrat. Auch das Ausschleusen der durch die Querstromfiltration abgetrennten Mikroorganismen zu einem Zeitpunkt nach der Filtration oder zwischen den Filtrationszyklen (DE 199 18 221) zum Zwecke der Regenerierung des Filters für den Wiedergebrauch verhindert das beschriebene Absterben und den Zerfall dieser Mikroorganismen und damit die Freisetzung von Pyrogenen nicht. Pyrogene führen in der klinischen Praxis insbesondere bei immunsupprimierten Patienten zu teilweise lebensgefährlichen Entzündungserscheinungen und machen daher den Einsatz dieser im Hinblick auf die notwendige Erzeugung keimfreien Trinkwassers unbedingt notwendigen Filtrationsmethode problematisch.
   b) Sterilfilter nach dem Stand der Technik stellen einen hydraulisch offenen, bakteriendichten Verschluss des Trinkwasserleitungssystems dar. Durch die dadurch bedingte Rückhaltung von Mikroorganismen kommt es zu einer Anreicherung derselben in dem Leitungssystem (Sanitärarmatur, Trinkwasserleitung) und damit zu einer beschleunigten retrograden Besiedlung mit den durch die Filtration abgetrennten Mikroorganismen. Die Konzentration an Mikroorganismen im Leitungssystem wird durch diese retrograde Besiedlung infolge extrem hoher Konzentrationen von abfiltrierten Mikroorganismen vor der Filtrationsbarriere insgesamt ständig erhöht und damit die gefürchtete Biofilmbildung begünstigt und beschleunigt. Die Folge ist, dass ein zunächst wenig mikrobiell kontaminiertes Leitungssystem nach Filterbenutzung höher kontaminiert ist. Ohne die Filtration findet bei freiem Auslauf dagegen ständig eine Ausschleusung von Mikroorganismen aus dem Leitungssystem statt, welche die Besiedlung des Leitungssystems verzögert.
   c) Ein Teil der abgetrennten Mikroorganismen, nämlich jene, welche sich auch unter den Bedingungen, die im Filtrationsmedium herrschen, beispielsweise bei relativ geringen Sauerstoffpartialdrücken, vermehren können, penetrieren in die Filtrationsmembran, vermehren sich dort und zerstören deren Integrität durch die so genannte Kanalbildung. Die Integrität eines Filters beschreibt das Rückhaltevermögen einer Filtermatrix und basiert auf der Erhaltung der räumlichen Strukturen innerhalb dieser Matrix. Die Zerstörung der Integrität von Filtrationsmembranen führt zum vorzeitigen Verlust der Funktionalität und damit zu verminderten Benutzungszeiten. Insbesondere im klinischen Bereich entsteht durch derartige Prozesse ein schwer zu kalkulierendes Risiko, welches nur durch kurze Benutzungszeiten des Filters reduziert werden kann, was wiederum zu vermehrten logistischen und wirtschaftlichen Aufwendungen führt.
   d) Das sterilfiltrierte Wasser aus der Wasserleitung enthält alle jene mikrobiellen Zerfallsprodukte (Lyseprodukte) und Zellbestandteile als Nährstoffe für Mikroorganismen hinter der Filtrationsbarriere. Aufgrund dieses erhöhten Nährstoffgehaltes (Messung als TOC oder BOD-Wert) ist das so erzeugte sterile Wasser nach dem bestimmungsgemäßen Verlassen des Sterilfilters für eine mikrobielle Wiederbesiedlung jedoch besonders geeignet und verkeimt dadurch schneller als nicht filtriertes Wasser. Dieser Umstand macht sich besonders an dem nach dem Stand der Technik offenen Filterauslauf (Permeatauslauf) des Filtergehäuses dadurch negativ bemerkbar, dass durch den erhöhten Nährstoffgehalt die mikrobielle Besiedlung des Filterauslaufes durch Keime aus der Umgebung, die so genannte retrograde Kontamination, wesentlich beschleunigt wird.

In der Praxis wird daher die mögliche Verwendungszeit des Sterilfilters nicht - wie der Fachmann das zunächst annehmen muss - durch die Sättigung der Aufnahmekapazität der Filtermembranen, sondern durch die Geschwindigkeit dieser retrograden Kontamination am ungeschützten Permeatauslauf bestimmt. Der Prozess der Sterilfiltration wird dann ad absurdum geführt, wenn das sterilfiltrierte Trinkwasser nach dem Passieren eines kontaminierten Permeatauslaufes mehr Mikroorganismen enthält als das unsterile, keimhaltige Leitungswasser vor der Filtration. Dieses Problem ist allgemein bekannt und begrenzt die Standzeit von POU-Sterilfiltern generell. In der klinischen Praxis wird diesem wesentlichen Nachteil der retrograden Kontamination durch zwei Methoden begegnet: 1. durch antimikrobielle Beschichtung des Filtergehäuses und Verwendung von z.B. versilberten Filtratausläufen. 2. durch reduzierte Benutzungszeiten des Sterilfilters. Insbesondere die reduzierten Benutzungszeiten der verwendeten Filter stellen in der Praxis einen entscheidenden Nachteil dar.

Der Erfindung liegt die Aufgabe zugrunde, eine Vorrichtung und ein Verfahren bereitzustellen, welche die vorgenannten Nachteile von endständigen Sterilfiltern nach dem Stand der Technik nicht aufweisen, und insbesondere eine zuverlässige Bereitstellung von keimfreiem Wasser und eine Vermeidung der retrograden Kontamination bietet.

Die Aufgabe wird erfindungsgemäß gelöst durch eine Vorrichtung zur Herstellung keimfreien Wassers, aufweisend eine Wasserleitung und einen endständigen Querstrom-Flüssigkeitssterilfilter, der an einer Wasserarmatur angebracht oder in einem Wasserarmatur-Gehäuse integriert ist und der mindestens einen Permeatauslauf für (keimfreies) Permeat und mindestens einen Retentatauslauf für keimhaltiges Retentat hat, dadurch gekennzeichnet, dass die Vorrichtung eine Apparatur zur Desinfektion des keimhaltigen Retentats aufweist und der Retentatauslauf des endständigen Querstrom-Flüssigkeitssterilfilters und die Apparatur zur Desinfektion des keimhaltigen Retentats über eine Retentatleitung miteinander verbunden sind, über die im endständigen Querstrom-Fiüssigkeitssterilfilter entstehendes keimhaltiges Retentat in die Apparatur überführt wird.

Weiterhin wird die Aufgabe gelöst durch ein Verfahren zur Herstellung keimfreien Wassers, wobei keimhaltiges Wasser in einer Vorrichtung über folgende Schritte gereinigt wird:
a) aus einer Wasserleitung fließt keimhaltiges Wasser in einen endständigen Querstrom-Flüssigkeitssterilfilter,
b) die im keimhaltigen Wasser befindlichen Mikroorganismen werden im Filter zurückgehalten und in einem keimhaltigen Retentat angereichert,
c) entstehendes (keimfreies) Permeat verlässt den endständigen Querstrom-Flüssigkeitssterilfilter über den Permeatauslauf,
dadurch gekennzeichnet, dass
d) das keimhaltige Retentat während des Filtrationsvorganges b) über einen Retentatauslauf kontinuierlich aus dem Querstrom-Flüssigkeitssterilfilter ausgeleitet wird,
e) das keimhaltige Retentat vom Retentatauslauf über eine Retentatleitung in eine Apparatur zur Desinfektion überführt wird und
f) in der Apparatur eine vollständige Abtötung der im keimhaltigen Retentat enthaltenen Erreger ohne Unterbrechung des Filtrationsvorganges b) erfolgt.

Die Erfindung betrifft somit eine Vorrichtung und ein Verfahren zur Herstellung keimfreien Wassers mittels eines endständigen Querstrom-Flüssigkeitssterilfilters ohne bakteriendichten Verschluss der Wasserleitung während des Filtrationsvorganges und somit ohne die mit diesem Verschluss verbundenen negativen Folgen der endständigen Sterilfiltration. Dies wird erfindungsgemäß durch die gleichzeitige, kontinuierliche Entsorgung des keimhaltigen Retentates aus dem Querstrom-Flüssigkeitssterilfilter während der Filtration und dessen Desinfektion in einem Desinfektionsgerät, vorzugsweise einem Selbst-desinfizierenden Geruchsverschluss bekannter Bauart, erreicht.

Das erfindungsgemäße Verfahren unter Nutzung der Querstromfiltration hat gegenüber statischen Filtrationsverfahren den Vorteil, dass durch die kontinuierliche Ausschleusung des abfiltrierten Materials aus dem Querstromfilter eine Sättigung der Filtermatrix mit abgetrennten Partikeln und Mikroorganismen vermieden und damit eine wesentlich längere Betriebszeit des Filters ermöglicht wird.

Weil es vor Entwicklung der erfindungsgemäßen Vorrichtung keine Möglichkeit der hygienisch sicheren kontinuierlichen Entsorgung des keimhaltigen Retentats während des Filtrationsvorganges gab, mussten die während des Gebrauches im Filter angereicherten Mikroorganismen von Zeit zu Zeit mit dem Filter entfernt und der Filter nach chemischer Reinigung und Sterilisation wieder eingesetzt werden. Erst durch die einerseits mit handelsüblichen Sterilfiltern nach dem Stand der Technik und vergleichsweise mit der erfindungsgemäßen Vorrichtung durchgeführten Untersuchungen wurde überraschend die Freisetzung von organischen Stoffen und Endotoxinen sowohl aus endständigen statischen als auch endständig dynamischen, allerdings nach dem Stand der Technik statisch betriebenen, Querstromsterilfiltern in unerwartet hohem Maße belegt.

Es hat sich im Rahmen der Erfindung gezeigt, dass erfindungsgemäß sowohl die Freisetzung von mikrobiellen Endotoxinen als auch die beschleunigte Rückverkeimung (retrograde Kontamination) der Wasserleitung durch eine zeitgleich zur Querstrom-Sterilfiltration erfolgende Abführung des keimhaltigen Retentats verhindert werden kann. Die kontinuierliche Abführung des keimhaltigen Retentats während der Filtration ist daher ein Vorteil der erfindungsgemäßen Vorrichtung bzw. des erfindungsgemäßen Verfahrens.

Erfindungsgemäß wird durch die kontinuierliche Ausleitung und Desinfektion der abgetrennten Mikroorganismen Folgendes erreicht:
1. Vermeidung der Ablagerung von abfiltrierten Mikroorganismen auf der Filtrationsmembran oder in Räumen zwischen den Filtermembranen (Membranbelegung, engl. membrane fouling) durch eine kontinuierliche Ausleitung des keimhaltigen Retentates während des Filtrationsvorganges.
2. Vermeidung des bakteriendichten Verschlusses der Wasserleitung mit der bekannten negativen Folge der gesteigerten retrograden Besiedlung derselben.
3. Durch die Vermeidung des Zerfalls der Mikroorganismen im Querstrom-Flüssigkeitssterilfilter selbst wird die Anreicherung des keimfreien Permeates mit organischen Stoffen vermieden. Dadurch entfällt die beschleunigte retrograde Kontamination des Permeatauslaufes des Querstrom-Flüssigkeitssterilfilters. Die damit verbundenen hygienischen Gefahren werden ausgeschlossen und damit die mögliche sichere Benutzungszeit wesentlich erhöht.
4. Durch die Verhinderung des Einwachsens von Mikroorganismen in die Filtrationsmembranen und die damit verbundene Zerstörung der Integrität der Membranen steigt die Verfahrenssicherheit der Sterilfiltration wesentlich an. Sicherheitsbedingte Verkürzungen der möglichen Benutzungszeit des Querstrom-Flüssigkeitssterilfilters entfallen.

Durch die Verbindung des Retentatauslaufes des Querstrom-Flüssigkeits-sterilfilters mit einer Apparatur zur Desinfektion, bevorzugt in Form eines Selbstdesinfizierenden Geruchsverschlusses , z.B. in Form eines Geruchsverschluss wie er in der EP 1 159 493 B1 beschrieben ist, wird mittels einer Retentatleitung erstmals die kontinuierliche Entsorgung des während der Filtration entstehenden keimhaltigen Retentats hygienisch sicher ermöglicht. Erst durch diese erfindungsgemäße Kombination werden die Vorteile der dynamischen Querstromfiltration auch für die spezielle Anwendung der endständigen Sterilfiltration von keimhaltigem Wasser wirksam.

Durch die extreme Verlängerung der hygienisch sicheren Betriebszeiten des endständigen Querstrom-Flüssigkeitssterilfilters mittels der erfindungsgemäßen Vorrichtung zur kontinuierlichen Herstellung sterilen und pyrogenarmen Wassers wird erstmals die notwendige hygienische Sicherheit über längere Zeiträume und ohne Unterbrechung der Filtration geschaffen und damit die Wirtschaftlichkeit dieser Filtration wesentlich erhöht. Der allseitigen Anwendung dieser für immunsupprimierte Patienten lebenswichtigen Hygienemaßnahme stehen damit keine hygienischen, technischen und wirtschaftlichen Hemmnisse mehr entgegen. Mit der Erfindung wird somit ein wichtiger Beitrag zur Verbesserung der Krankenhaushygiene geleistet, weil die Funktion des endständigen Querstrom-Flüssigkeitssterilfilters erst durch die Lehre dieser Erfindung vollständig und ohne einschränkende Randbedingungen und negative Nebenwirkungen erfüllt werden kann.

Das Ergebnis des erfindungsgemäßen Zusammenwirkens aller Komponenten ist daher eine Vorrichtung bzw. ein Verfahren, mit der/dem steriles und pyrogenarmes Wasser ohne bakteriologischen Verschluss der Wasserleitung, ohne Unterbrechung der Filtration in kurzen Intervallen und mit maximaler hygienischer Sicherheit erzeugt werden kann und die/das somit alle genannten Nachteile der nach dem Stand der Technik beschriebenen und in der Praxis verwendeten POU-Sterilfilter nicht mehr aufweist.

Aufbau und Funktionsweise der erfindungsgemäßen Vorrichtung zur kontinuierlichen Herstellung keimfreien und pyrogenarmen Wassers ohne bakteriendichten Verschluss der Wasserleitung werden im Folgenden beschrieben.

Die erfindungsgemäße Vorrichtung weist einen Querstrom-Flüssigkeitssterilfilter auf, der aus einem Filtergehäuse besteht, in dem sich bevorzugt ein Hohlfasermembran-Filtereinsatz befindet, der Hohlfasermembranen enthält, die beispielsweise bündelweise angeordnet sind. Durch ein System von Dichtungen wird das keimfreie Permeat vom keimhaltigen Retentat räumlich getrennt. Der Querstrom-Flüssigkeitssterilfilter weist weiterhin einen Retentatauslauf auf, welcher mit einer Retentatleitung versehen ist. Das beim Durchtritt des keimhaltigen Wassers durch den Filtereinsatz entstehende keimfreie Permeat verlässt den Querstrom-Flüssigkeitssterilfilter über den Permeatauslauf. Das keimhaltige Retentat verlässt den Querstrom-Flüssigkeitssterilfilter über den Retentatauslauf, welcher mit einer Retentatleitung versehen ist. Die Retentatleitung mündet in einer Apparatur zur Desinfektion. In der Apparatur werden die im keimhaltigen Retentat enthaltenen Keime durch Hitze, ultraviolettes Licht, Ultraschall oder durch eine Kombination derselben abgetötet.

Der selbdesinfizierende Geruchsverschluss ist bevorzugt ein Geruchsverschluss, wie er in der WO 2000/053857 A1 und der EP 1 159 493 B1 beschrieben ist. Hinsichtlich der Beschaffenheit des Geruchsverschlusses wird auf die WO 2000/053857 A1 Bezug genommen. Ein solcher Selbstdesinfizierender Geruchsverschluss wird in den Abwasserleitungen der erfindungsgemäßen Vorrichtung platziert und weist einen Geruchsverschluss beliebiger Bauart mit einer bestimmungsgemäß darin enthaltenen Verschlussflüssigkeit und mindestens einem Beschallungs- und Schwingsystem beliebiger Frequenz und mindestens einem System zur Erhitzung des Innenraumes des Geruchsverschlusses auf. Die beiden Systeme werden so gesteuert, dass eine Reinigung und Desinfektion des Geruchverschlusses und der im Geruchsverschluss befindlichen Flüssigkeit während des Gebrauches des Geruchsverschlusses erfolgt. Bei Verwendung von Schwingsystemen mit Ultraschallfrequenz erfolgt dabei eine Keimabtötung bereits bei Temperaturen, die unter der üblichen Abtötungstemperatur der abzutötenden Mikroorganismen liegen und in einer Zeit, die unter der üblicherweise notwendigen Abtötungszeit dieser Mikroorganismen liegt und ohne funktionsstörende Verdampfungsverluste der Sperrflüssigkeit. Dabei werden auch sporenbildende und sonstige bei Normaldruck und Temperaturen bis 100°C in prozesstechnisch nicht wirtschaftlicher Zeit nicht oder schwer abzutötende oder gegenüber hohen Temperaturen resistente Keime abgetötet. Gleichzeitig erfolgt hierdurch eine Reinigung der Innenflächen des Geruchsverschlusses und eine Verhinderung eines Wandbewuchses im Geruchsverschluss und den angrenzenden Rohrleitungsteilen und somit wird eine Rückverkeimung der Öffnung der Rohrleitung sowie deren Umgebung wirksam und sicher verhindert.

Beim erfindungsgemäßen Verfahren wird der Hohlfasermembran-Filtereinsatz von keimhaltigem Wasser aus der Wasserleitung durchflossen. Die im keimhaltigen Wasser befindlichen Mikroorganismen werden beim Durchtritt desselben durch die Hohlfasermembranen zurückgehalten und im keimhaltigen Retentat angereichert. Das beim Durchtritt des keimhaltigen Wassers durch die Hohlfasermembranen entstehende keimfreie Permeat verlässt den Querstrom-Flüssigkeitssterilfilter über den Permeatauslauf. Das keimhaltige Retentat verlässt den Querstrom-Flüssigkeitssterilfilter über den Retentatauslauf, welcher mit einer Retentatleitung versehen ist. Aus der Retentatleitung fließt das Retentat in einen Selbstdesinfizierenden Geruchsverschluss. Im Selbstdesinfizierenden Geruchsverschluss werden die im keimhaltigen Retentat enthaltenen Keime durch Hitze, ultraviolettes Licht, Ultraschall oder durch eine Kombination derselben abgetötet.

Das erfindungsgemäße Verfahren wird bevorzugt in der erfindungsgemäßen Vorrichtung durchgeführt.

Zur weiteren Erhöhung der hygienischen Sicherheit des Querstrom-Flüssigkeitssterilfilters weist die erfindungsgemäße Vorrichtung zur Vermeidung retrograder mikrobieller Kontamination am Permeatauslauf bevorzugt einen Permeatauslaufschutz auf. Dieser dient der Vermeidung des direkten Kontaktes zum Filterumfeld (Spritzwasser, keimhaltige Aerosole der Umgebungsluft), so dass die Gefahr der Verkeimung des Permeatauslaufes vollständig beseitigt wird. Dadurch, dass der Permeatauslaufschutz bestimmungsgemäß in wesentlich kürzeren Intervallen als der Querstrom-Flüssigkeitssterilfilter selbst, vorzugsweise täglich, gewechselt wird, wird die retrograde Kontamination des Permeatauslaufes vollständig vermieden. Der sekundenschnelle, problemlose tägliche Wechsel des Permeatauslaufschutzes ohne Hilfsmittel wird durch zwei Haltewülste ermöglicht, welche auch für eine genügend feste Verbindung zwischen Permeatauslauf und Permeatauslaufschutz sorgen. Der Permeatauslaufschutz besteht bevorzugt aus einem schlauchförmigen, sich selbstverschließenden, elastischen Polymerkörper. Der Polymerkörper weist in einer Ausführungsform einen schlauchförmigen Bereich und eine Haltewulst an einem der Enden auf. Die Form ist etwa dem unteren Ansatzstück eines Luftballons vergleichbar. Der Polymerkörper wird durch den Druck des im Filterinneren erzeugten keimfreien Permeates geöffnet und nach Beendigung des Austritts des keimfreien Permeates aus dem Querstrom-Flüssigkeitssterilfilter durch den äußeren Luftdruck wieder verschlossen.

Die Erfindung wird anhand der nachfolgenden Ausführungsbeispiele näher erläutert.

### Ausführungsbeispiel 1

Die erfindungsgemäße Vorrichtung kann an einem Wasch- oder Spülbecken angebracht sein. Eine Wasserleitung ist zum Zwecke der Wasserentnahme mit einer Wasserarmatur versehen. Am Auslauf der Wasserarmatur ist zur Herstellung keimfreien Wassers ein endständiger Querstrom-Flüssigkeitssterilfilter angebracht. Der endständige Querstrom-Flüssigkeitssterilfilter hat einen während der Filtration offenen Retentatauslauf. Durch eine Retentatleitung gelangt das keimhaltige Retentat während der Filtration in einen Selbstdesinfizierenden Geruchsverschluss, der unter einem Wasch- oder Spülbecken installiert ist.

### Ausführungsbeispiel 2

Die erfindungsgemäße Vorrichtung zur Herstellung keimfreien Wassers, wie sie in Ausführungsbeispiel 1 beschrieben ist, ist am Permeatauslauf des endständigen Querstrom-Sterilfilters mit einem Permeatauslaufschutz zur Vermeidung retrograder mikrobieller Kontamination des Permeatauslaufes versehen.

### Ausführungsbeispiel 3

In einer weiteren Ausführung ist die erfindungsgemäße Vorrichtung ebenfalls an einem Wasch- oder Spülbecken angebracht. Bei dieser Variante ist der endständige Querstrom-Sterilfilter mit Permeatauslauf, Retentatauslauf und Retentatleitung in einem Wasserarmaturgehäuse untergebracht.

### Ausführungsbeispiel 4

In einer Ausführungsform weist die erfindungsgemäße Vorrichtung einen Permeatauslaufschutz auf. Dieser Permeatauslaufschutz der erfindungsgemäßen Vorrichtung besteht aus einem selbstverschließenden Polymerkörper, der schlauchartig über den Permeatauslauf geschoben wird und der durch eine erste Haltewulst am Polymerkörper und eine zweite Haltewulst am Permeatauslauf fixiert ist.

### Ausführungsbeispiel 5

Die erfindungsgemäße Vorrichtung kann in einer weiteren Ausführungsform an einer Duscheinrichtung angebracht sein. Eine Wasserleitung ist zum Zwecke der Wasserentnahme zum Duschen mit der erfindungsgemäßen Vorrichtung versehen. Der endständige Querstrom-Flüssigkeitssterilfilter weist dabei ein Filtergehäuse auf, das so gestaltet ist, dass das durch den duschkopfartig gestalteten Permeatauslauf austretende keimfreie Permeat einen Duschstrahl ergibt. Der Querstrom-Flüssigkeitssterilfilter hat einen während der Filtration offenen Retentatauslauf. Durch eine Retentatleitung gelangt das keimhaltige Retentat während der Filtration in einen Selbstdesinfizierenden Geruchsverschluss. An das Filtergehäuse schließt sich bei Ausführung als Handdusche ein Duschgriff an. Die Retentatleitung ist beispielsweise mit einem Selbstdesinfizierenden Geruchsverschluss, verbunden, wobei der Selbstdesinfizierende Geruchsverschluss am Auslauf unter der Duschwanne angebracht ist.

### Ausführungsbeispiel 6

Eine Wasserleitung ist an der Wasserarmatur mit einer flexiblen Ver- und Entsorgungsleitung und einer erfindungsgemäßen Vorrichtung versehen. Die flexible Ver- und Entsorgungsleitung enthält eine Wasserleitung, durch welche keimhaltiges Wasser zum Querstrom-Flüssigkeitssterilfilter gelangt, und eine Retentatleitung, welche mit dem Retentatauslauf des Querstrom-Flüssigkeitssterilfilters verbunden ist. Durch die Retentatleitung gelangt das keimhaltige Retentat während der Filtration in einen Selbstdesinfizierenden Geruchsverschluss, welcher sich unter einem Wasch- oder Spülbecken befindet. Das Filtergehäuse ist mit einem Duschgriff versehen. Das aus dem duschkopfartigen Permeatauslauf des Querstrom-Flüssigkeitssterilfilters austretende keimfreie Permeat ergibt einen Duschstrahl, mit dem der betreffende Körperteil gereinigt wird.

Die Erfindung wird anhand der nachfolgenden Figuren näher erläutert.

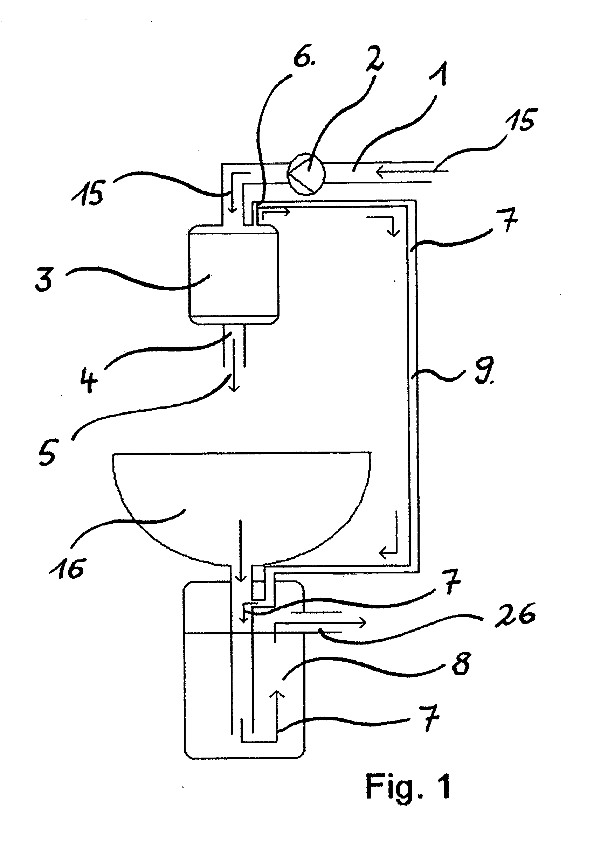

Figur 1 zeigt eine erste Ausführungsform der erfindungsgemäßen Vorrichtung. Eine Wasserleitung 1 ist zum Zwecke der Wasserentnahme mit einer Wasserarmatur 2 versehen. Am Auslauf der Wasserarmatur 2 ist zur Herstellung keimfreien Wassers ein endständiger Querstrom-Flüssigkeitssterilfilter 3 angebracht. Während des erfindungsgemäßen Betriebs strömt keimhaltiges Wasser 15 durch die Wasserleitung 1 und die Wasserarmatur 2 zum Querstrom-Flüssigkeitsfilter 3 entlang der in der Figur dargestellten Pfeile. Im Filter 3 wird das Wasser von Mikroorganismen befreit. Der endständige Querstrom-Flüssigkeitssterilfilter 3 hat einen während der Filtration offenen Retentatauslauf 6, über den das Retentat 7 abtransportiert wird. Durch eine Retentatleitung 9 gelangt das bei der Filtration entstehende keimhaltige Retentat 7 während der Filtration in einen Selbstdesinfizierenden Geruchsverschluss 8, der unter einem Wasch- oder Spülbecken 16 installiert ist. Das aus den Wasch- bzw. Spülbecken abfließende Wasser fließt ebenfalls in den Geruchsverschluss 8. Aus dem Geruchsverschluss 8 wird das Wasser über eine Abwasserleitung 26 abtransportiert.

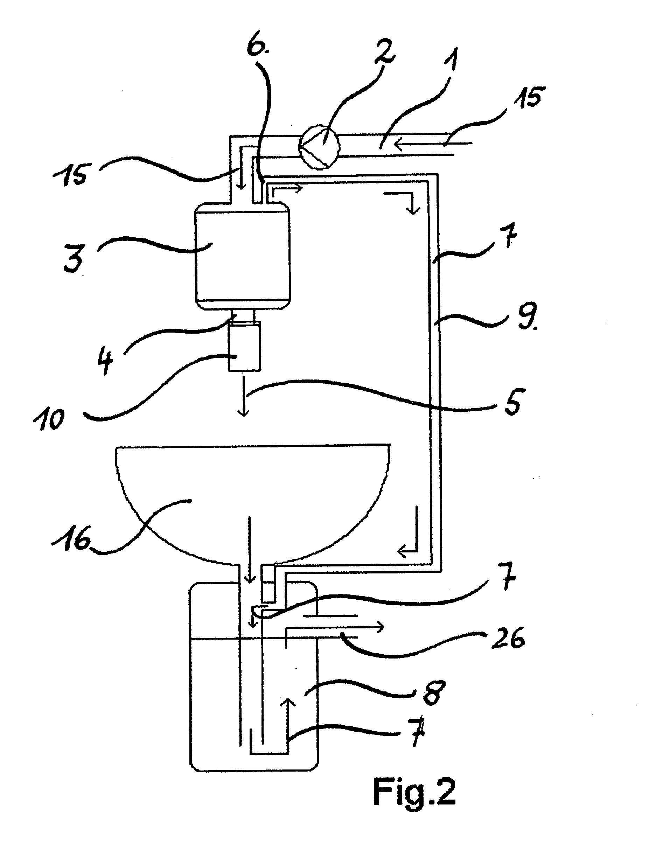

In Figur 2 ist eine erfindungsgemäße Vorrichtung wie in Figur 1 dargestellt, die zusätzlich mit einem Permeatauslaufschutz 10 zur Vermeidung retrograder mikrobieller Kontamination des Permeatauslaufes 4 versehen ist. Das Permeat 5 fließt in diesem Fall aus dem Filter 3 durch den Permeatauslaufschutz 10.

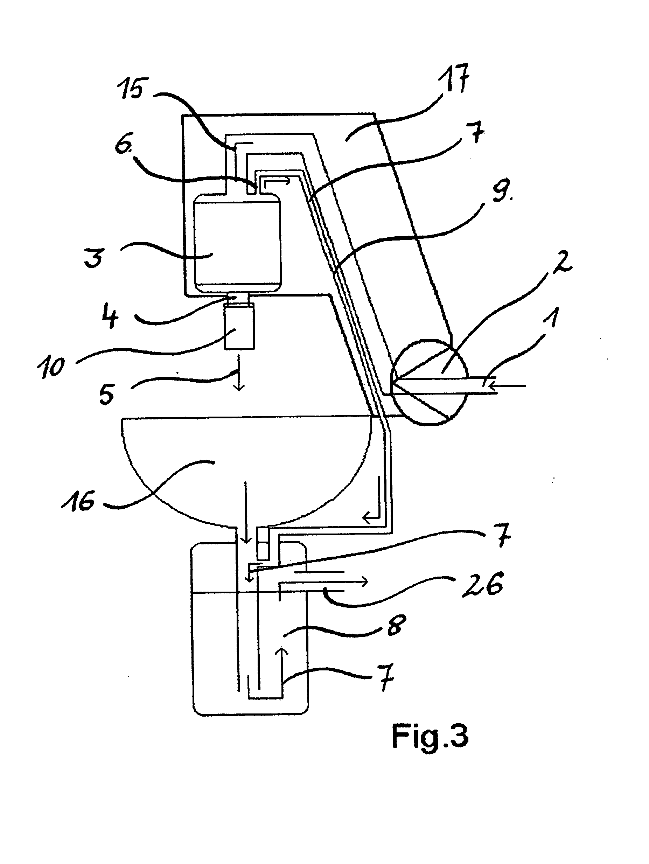

In Figur 3 ist eine weitere Ausführungsform der erfindungsgemäßen Vorrichtung dargestellt. Der endständige Querstrom-Sterilfilter 3 ist mit Permeatauslauf 4, Permeatauslaufschutz 10, Retentatauslauf 6 und Retentatleitung 9 in einem Wasserarmaturgehäuse 17 untergebracht.

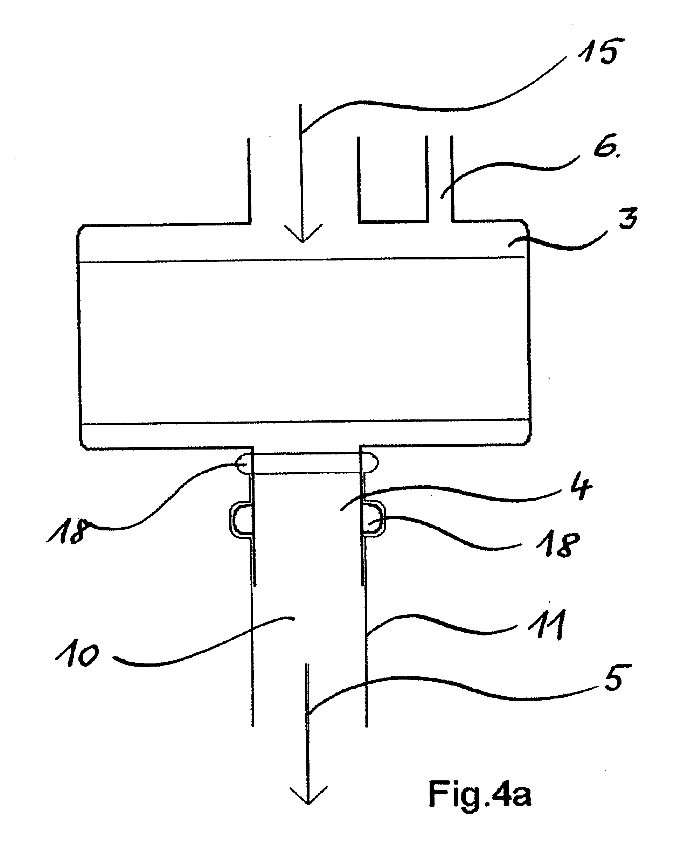

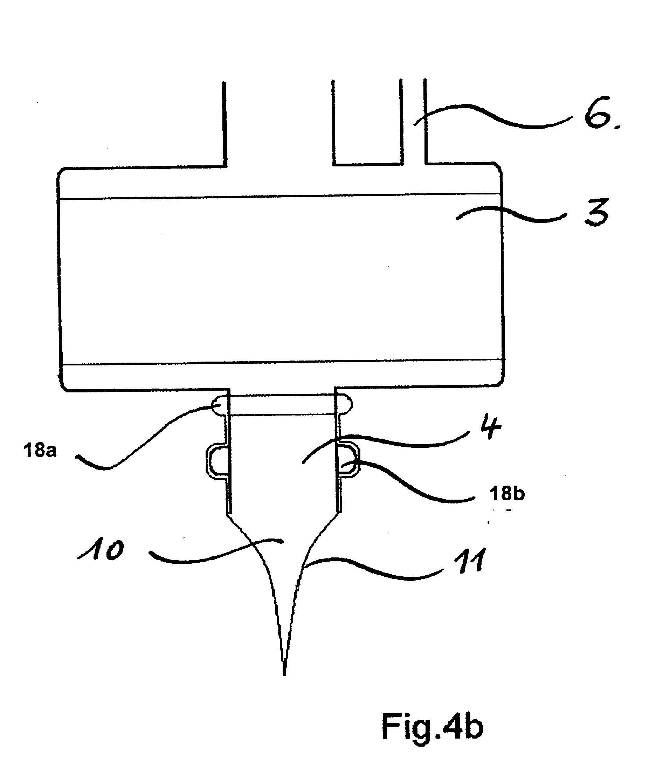

In den Figuren 4a und 4b ist ein Permeatauslaufschutz 10 zur Vermeidung retrograder mikrobieller Kontamination des Permeatauslaufes 4 in offenem (Fig.4a) und geschlossenem (Fig. 4b) Zustand dargestellt. Der Permeatauslaufschutz 10 besteht aus einem selbstverschließenden Polymerkörper 11, der schlauchartig über den Permeatauslauf 4 geschoben wird und der durch eine erste Haltewulst 18a am Polymerkörper 11 und eine zweite Haltewulst 18b am Permeatauslauf 4 fixiert ist.

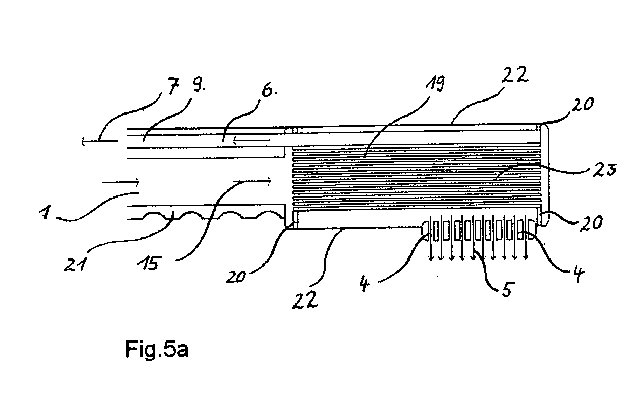

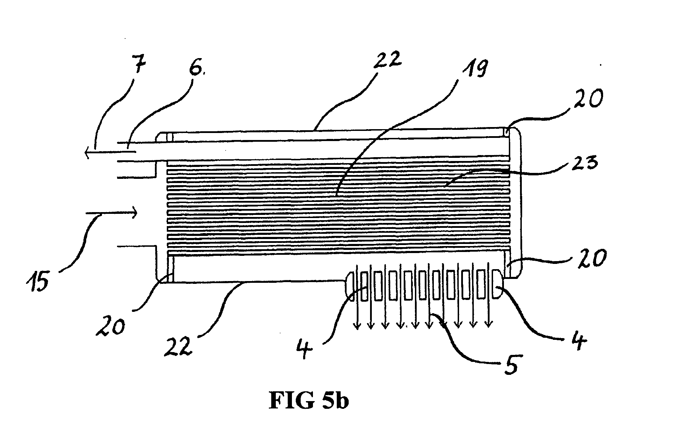

Eine weitere Ausführungsform der erfindungsgemäßen Vorrichtung ist in den Figuren 5a und 5b dargestellt. Eine Wasserleitung 1 ist zum Zwecke der Wasserentnahme zum Duschen mit einem endständigen Querstrom-Flüssigkeitssterilfilter 3 versehen. Das Filtergehäuse 22 ist dabei so gestaltet, dass das durch den duschkopfartig gestalteten Permeatauslauf 4 austretende keimfreie Permeat 5 einen Duschstrahl ergibt. Der Querstrom-Flüssigkeitssterilfilter 3 hat einen während der Filtration offenen Retentatauslauf 6. Durch eine Retentatleitung 9 gelangt das keimhaltige Retentat 7 während der Filtration in einen Selbstdesinfizierenden Geruchsverschluss, hier nicht dargestellt. An das Filtergehäuse schließt sich im Falle einer Handdusche ein Duschgriff 21 an (Fig. 5a).

Der Querstrom-Flüssigkeitssterilfilter 3 besteht aus einem Filtergehäuse 22, in dem sich ein Hohlfasermembran-Filtereinsatz 19, der Hohlfasermembranen 23 enthält, befindet. Durch ein System von Dichtungen 20 wird das keimfreie Permeat 5 vom keimhaltigen Retentat 7 räumlich getrennt. Dabei wird der Hohlfasermembran-Filtereinsatz 19 von keimhaltigem Wasser 15 aus der Wasserleitung 1 durchflossen. Das beim Durchtritt des keimhaltigen Wassers 15 durch die Hohlfasermembranen 23 entstehende keimfreie Permeat 5 verlässt den Querstrom-Flüssigkeitssterilfilter 3 über den Permeatauslauf 4. Das keimhaltige Retentat 7 verlässt den Querstrom-Flüssigkeitssterilfilter 3 über den Retentatauslauf 6, welcher mit einer Retentatleitung 9 versehen ist. Die Retentatleitung 9 mündet in einen Selbstdesinfizierenden Geruchsverschluss, der hier nicht dargestellt ist.

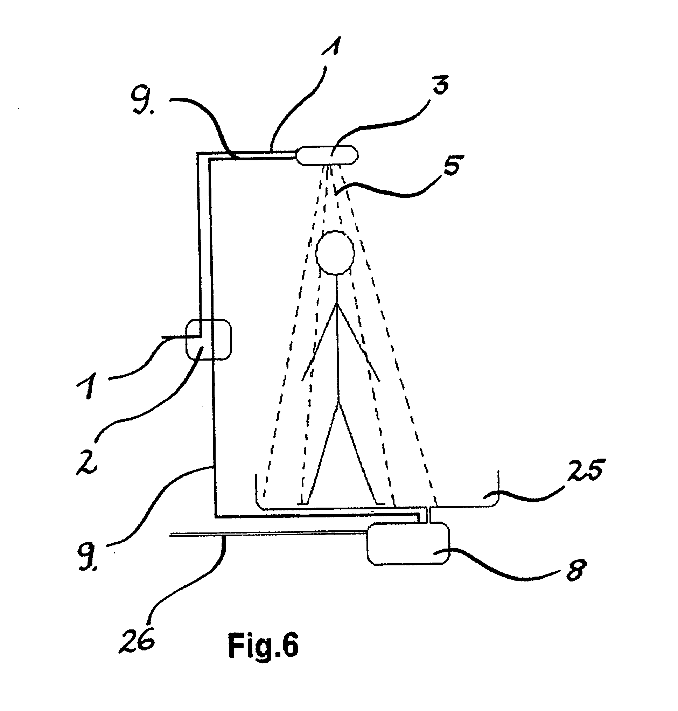

In Figur 6 ist die erfindungsgemäße Vorrichtung in Kombination mit einer Duschwanne 25 dargestellt. Eine in Figur 5a dargestellte Duschvorrichtung ist über eine Retentatleitung 9 mit einem Selbstdesinfizierenden Geruchsverschluss 8 verbunden. Der Selbstdesinfizierenden Geruchsverschluss 8 ist am Auslauf unter der Duschwanne 25 angebracht. Sowohl das Wasser aus der Duschwanne 25 als auch das Retentat 7 fließen durch die Apparatur 8 in die Abwasserleitung 26.

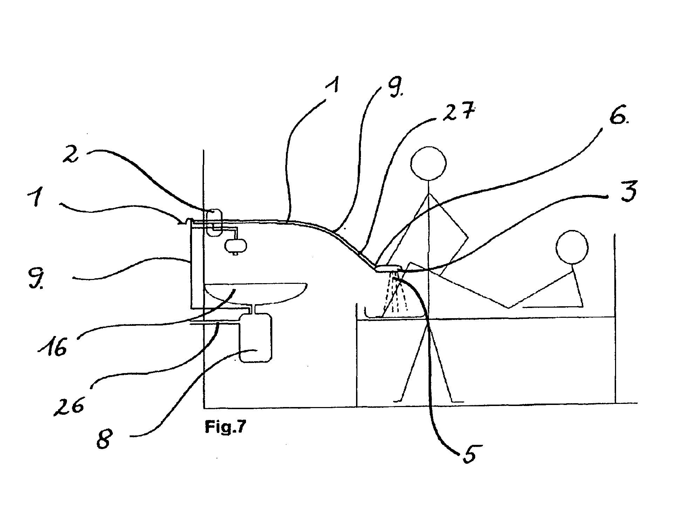

Figur 7 zeigt eine weitere Ausführungsform der erfindungsgemäßen Vorrichtung. Eine Wasserleitung 1 ist an der Wasserarmatur 2 mit einer flexiblen Ver- und Entsorgungsleitung 27 und einem endständigen Querstrom-Flüssigkeitssterilfilter 3 versehen. Die flexible Ver- und Entsorgungsleitung 27 enthält eine Wasserleitung 1, durch welche keimhaltiges Wasser 15 zum Querstrom-Flüssigkeitssterilfilter 3 gelangt und eine Retentatleitung 9, welche mit dem Retentatauslauf 6 des Querstrom-Flüssigkeitssterilfilters 3 verbunden ist. Durch die Retentatleitung 9 gelangt das keimhaltige Retentat 7 während der Filtration in einen Selbstdesinfizierenden Geruchsverschluss 8, welcher sich unter einem Wasch- oder Spülbecken 16 befindet. Das Filtergehäuse 22 ist mit einem Duschgriff 21 versehen. Das aus dem duschkopfartigen Permeatauslauf 4 des Querstrom-Flüssigkeitssterilfilters 3 austretende keimfreie Permeat 5 ergibt einen Duschstrahl, mit dem der betreffende Körperteil gereinigt wird.

**Bezugszeichenliste**

| | |
|---|---|
| (1) | = Wasserleitung |
| (2) | = Wasserarmatur |
| (3) | = Querstrom-Flüssigkeitssterilfilter |
| (4) | = Permeatauslauf |
| (5) | = Permeat |
| (6) | = Retentatauslauf |
| (7) | = keimhaltiges Retentat |
| (8) | = Selbstdesinfizierender Geruchsverschluss |
| (9) | = Retentatleitung |
| (10) | = Permeatauslaufschutz |
| (11) | = selbstverschließender Polymerkörper |
| (15) | = keimhaltiges Wasser |
| (16) | = Wasch- oder Spülbecken |
| (17) | = Wasserarmatur-Gehäuse |
| (18) | = Haltewulst |
| (19) | = Hohlfasermembran - Filtereinsatz |
| (20) | = Dichtung |
| (21) | = Duschgriff |
| (22) | = Filtergehäuse |
| (23) | = Hohlfasermembran |
| (25) | = Duschwanne |
| (26) | = Abwasserleitung |
| (27) | = flexible Ver- und Entsorgungsleitung |

## Patentansprüche

1. Vorrichtung zur Herstellung keimfreien Wassers, aufweisend eine Wasserleitung (1) und einen endständigen Querstrom-Flüssigkeitssterilfilter (3) mit mindestens einem Permeatauslauf (4) für das Permeat (5) und mindestens einem Retentatauslauf (6) für keimhaltiges Retentat (7), wobei der Filter (3) an einer Wasserarmatur (2) angebracht oder in ein Wasserarmatur-Gehäuse (17) integriert ist, **dadurch gekennzeichnet, dass** die Vorrichtung eine Apparatur (8) zur Desinfektion des keimhaltigen Retentats (7) aufweist und der Retentatauslauf (6) des endständigen Querstrom-Flüssigkeitssterilfilters (3) und die Apparatur zur Desinfektion des keimhaltigen Retentats (7) über eine Retentatleitung (9) miteinander verbunden sind, über die im endständigen Querstrom-Flüssigkeitssterilfilter (3) entstehendes keimhaltiges Retentat (7) in die Apparatur (8) überführt wird.

2. Vorrichtung zur Herstellung keimfreien Wassers nach Anspruch 1, **dadurch gekennzeichnet, dass** die Apparatur (8) zur Desinfektion des keimhaltigen Retentats (7) ein Selbstdesinfizierender Geruchsverschluss (8) ist.

3. Vorrichtung zur Herstellung keimfreien Wassers nach den Anspruch 1 oder 2, **dadurch gekennzeichnet, dass** der Querstrom-Flüssigkeitssterilfilter (3) in ein Wasserarmatur-Gehäuse (17) integriert ist.

4. Vorrichtung zur Herstellung keimfreien Wassers nach einem der Ansprüche 1 bis 3, **dadurch gekennzeichnet, dass** der Querstrom-Flüssigkeitssterilfilter (3) Hohlfaser-Membranen (23) enthält.

5. Vorrichtung zur Herstellung keimfreien Wassers nach Anspruch 1 bis 4, **dadurch gekennzeichnet, dass** der Permeatauslauf (4) des endständigen Querstrom-Flüssigkeitssterilfilters (3) mit einem Permeatauslaufschutz (10) versehen ist.

6. Vorrichtung zur Herstellung keimfreien Wassers nach Anspruch 5, **dadurch gekennzeichnet, dass** der Permeatauslaufschutz (10) aus einem schlauchförmigen, selbstverschließenden, elastischen Polymerenkörper (11) besteht, welcher durch den Druck des im Filterinneren erzeugten Permeates (5) geöffnet wird und der nach Beendigung des Austritts des Permeats aus dem Querstrom-Flüssigkeitssterilfilter (3) durch den äußeren Luftdruck wieder verschlossen wird.

7. Vorrichtung zur Herstellung keimfreien Wassers nach Anspruch 6, **dadurch gekennzeichnet, dass** der Polymerkörper (11), mit Zusätzen antimikrobieller Substanzen oder mit einer antimikrobiellen Beschichtung versehen ist.

8. Verfahren zur Herstellung keimfreien Wassers, wobei keimhaltiges Wasser in einer Vorrichtung über folgende Schritte gereinigt wird:
a) aus einer Wasserleitung (1) fließt keimhaltigen Wasser (15) in einen endständigen Querstrom-Flüssigkeitssterilfilter (3),
b) die im keimhaltigen Wasser (15) befindlichen Mikroorganismen werden im Filter (3) zurückgehalten und in einem keimhaltigen Retentat (7) angereichert,
c) entstehendes Permeat (5) verlässt den endständigen Querstrom-Flüssigkeitssterilfilter (3) über den Permeatauslauf (4),
**dadurch gekennzeichnet, dass**
d) das keimhaltige Retentats (7) während des Filtrationsvorganges b) über einen Retentatauslauf (6) kontinuierlich aus dem Filter (3) ausgeleitet wird,
e) das keimhaltige Retentat (7) vom Retentatauslauf (6) über eine Retentatleitung (9) in eine Apparatur (8) zur Desinfektion überführt wird und
f) in der Apparatur (8) eine vollständige Abtötung der im keimhaltigen Retentat (7) enthaltenen Erreger ohne Unterbrechung des Filtrationsvorganges b) erfolgt.

9. Verfahren nach Anspruch 8, **dadurch gekennzeichnet, dass** das Verfahren in einer Vorrichtung gemäß einem der Ansprüche 1 - 7 durchgeführt wird.

## Claims

1. Device for producing microbe-free water, embodying a water pipe (1) and a terminal transverse flow liquid sterile filter (3) with at least one permeate outlet (4) for the permeate (5) and at least one retentate outlet (6) for microbe-containing retentate (7), in which the filter (3) is attached to a water tap (2) or is integrated into a water tap housing (17), **characterised in that** the device embodies an apparatus (8) for disinfecting the microbe-containing retentate (7) and the retentate outlet (6) of the terminal transverse-flow liquid sterile filter (3) and the apparatus for disinfecting the microbe-containing retentate (7) are connected to each other by a retentate pipe (9), through which the microbe-containing retentate (7) occurring in the terminal transverse flow liquid sterile filter (3) is carried over into the apparatus (8).

2. Device for producing microbe-free water according to Claim 1, **characterised in that** the apparatus (8) for disinfecting the microbe-containing retentate (7) is a self-disinfecting odour trap (8).

3. Device for producing microbe-free water according to any one of Claim 1 or 2, **characterised in that** the transverse flow liquid sterile filter (3) is integrated into a water tap housing (17).

4. Device for producing microbe-free water according to any one of Claims 1 to 3, **characterised in that** the transverse flow liquid sterile filter (3) contains hollow fibre membranes (23).

5. Device for producing microbe-free according to any one of Claims 1 to 4, **characterised in that** the permeate outlet (4) of the terminal transverse flow liquid sterile filter (3) is provided with a permeate outlet protection (10).

6. Device for producing microbe-free water according to Claim 5, **characterised in that** the permeate outlet protection (10) consists of a hose-shaped, self-locking, elastic polymeric body (11), which is opened by the pressure of the permeate (5) generated inside the filter and which is closed again after the permeate finishes exiting from the transverse flow liquid sterile filter (3) due to the outer air pressure.

7. Device for producing microbe-free water according to Claim 6, **characterised in that** the polymeric body (11) is provided with additives of anti-microbial substances or with an anti-microbial coating.

8. Process for producing microbe-free water, in which microbe-containing water is cleaned in a device using the following steps:
a) From a water pipe (1), microbe-containing water (15) flows into a terminal transverse-flow liquid sterile filter (3),
b) The micro-organisms found in the microbe-containing water (15) are retained in the filter (3) and enriched in a microbe-containing retentate (7).
c) The permeate (5) arising leaves the terminal transverse-flow liquid sterile filter (3) through the permeate outlet (4),
**characterised in that**
d) The microbe-free retentate (7) is continuously directed outwards during the filtration process b) through a retentate outlet (6) from the filter (3),
e) The microbe-containing retentate (7) is carried over from the retentate outlet (6) via a retentate pipe (9) into an apparatus (8) for disinfection and
f) In the apparatus (8) a complete rate of elimination of the pathogen contained in the microbe-containing retentate (7) is done without interrupting the filtration process b).

9. Process in accordance with Claim 8, **characterised in that** the process is carried out in a device according to any one of Claims 1 - 7.

## Revendications

1. Dispositif de production d'eau exempte de germes, présentant une conduite d'eau (1) et un filtre de stérilisation de liquides à écoulement transversal (3) situé à l'extrémité et comportant au moins une sortie de perméat (4) pour le perméat (5) et au moins une sortie de rétentat (6) pour le rétentat (7) contenant des germes, le filtre (3) étant monté sur un appareil de robinetterie à eau (2) ou étant intégré dans un corps d'appareil de robinetterie à eau (17), **caractérisé en ce que** le dispositif présente un équipement (8) pour la désinfection du rétentat (7) contenant des germes, et la sortie de rétentat (6) du filtre de stérilisation de liquides à écoulement transversal (3), situé à l'extrémité, et l'équipement de désinfection du rétentat (7) contenant des germes sont reliés l'un à l'autre par une conduite de rétentat (9) par l'intermédiaire de laquelle le rétentat (7) contenant des germes, produit dans le filtre de stérilisation de liquides à écoulement transversal (3) situé à l'extrémité, est transféré dans l'équipement (8).

2. Dispositif de production d'eau exempte de germes selon la revendication 1, **caractérisé en ce que** l'équipement (8) de désinfection du rétentat (7) contenant des germes est un siphon autodésinfectant (8).

3. Dispositif de production d'eau exempte de germes selon la revendication 1 ou 2, **caractérisé en ce que** le filtre de stérilisation de liquides à écoulement transversal (3) est intégré dans un corps d'appareil de robinetterie (17).

4. Dispositif de production d'eau exempte de germes selon l'une des revendications 1 à 3, **caractérisé en ce que** le filtre de stérilisation de liquides à écoulement transversal (3) contient des membranes à fibres creuses (23).

5. Dispositif de production d'eau exempte de germes selon la revendication 1 à 4, **caractérisé en ce que** la sortie de perméat (4) du filtre de stérilisation de liquides à écoulement transversal (3), situé à l'extrémité, est dotée d'une protection de sortie de perméat (10).

6. Dispositif de production d'eau exempte de germes selon la revendication 5, **caractérisé en ce que** la protection de sortie de perméat (10) est constituée d'un corps en polymère (11) tubulaire élastique à fermeture automatique, qui est ouvert par la pression du perméat (5) produit à l'intérieur du filtre et qui est refermé par la pression de l'air extérieur, après que le perméat a quitté le filtre de stérilisation de liquides à écoulement transversal (3).

7. Dispositif de production d'eau exempte de germes selon la revendication 6, **caractérisé en ce que** le corps en polymère (11) reçoit des ajouts de substances antimicrobiennes ou un revêtement antimicrobien.

8. Procédé de production d'eau exempte de germes, selon lequel de l'eau contenant des germes est nettoyée dans un dispositif en passant par les étapes suivantes :
a) de l'eau (15) contenant des germes s'écoule d'une conduite d'eau (1) dans un filtre de stérilisation de liquides à écoulement transversal (3) situé à l'extrémité,
b) les microorganismes contenus dans l'eau (15) contenant des germes sont retenus dans le filtre (3) et sont concentrés dans un rétentat (7) contenant des germes,
c) le perméat (5) produit quitte le filtre de stérilisation de liquides à écoulement transversal (3) situé à l'extrémité, via la sortie de perméat (4),
**caractérisé en ce que**
d) pendant l'opération de filtration b), le rétentat (7) contenant des germes est guidé hors du filtre (3) de manière continue, via une sortie de rétentat (6),
e) le rétentat (7) contenant des germes est amené depuis la sortie de rétentat (6), via une conduite de rétentat (9), dans un équipement (8) en vue de la désinfection, et
f) dans l'équipement (8), les agents pathogènes contenus dans le rétentat (7) contenant des germes sont complètement détruits, sans interruption de l'opération de filtration b).

9. Procédé selon la revendication 8, **caractérisé en ce que** le procédé est mis en oeuvre dans un dispositif selon l'une des revendications 1 à 7.
